# EUROPEAN PATENT SPECIFICATION

(11) **EP 1 332 337 B1**
(45) Date of publication and mention of the grant of the patent: **09.04.2014**
(21) Application number: 00978494.3
(22) Date of filing: 10.11.2000
(51) Int. Cl.: G01D 5/353, G01H 9/00

(54) **MULTI-PARAMETER INTERFEROMETRIC FIBER OPTIC SENSOR**
MULTIPARAMETER INTERFEROMETRISCHER GLASFASERSENSOR
CAPTEUR A FIBRES OPTIQUES INTERFEROMETRIQUE A PARAMETRES MULTIPLES

(43) Date of publication of application: 06.08.2003
(73) Proprietor: Welldynamics, B.V., Leiderdorp 2352 BZ (NL)
(72) Inventor: SKINNER, Neal, G., Lewisville, TX 75067 (US); DENNIS, John, R., Bozeman, Montana 59715 (US); LEBLANC, Michel, Centreville, VA 20120 (US)
(74) Representative: Curtis, Philip Anthony
(86) International application number: PCT/US2000/030901
(87) International publication number: WO 2002/039068

(56) References cited:
- US-A- 4 552 457
- US-A- 4 589 285
- US-A- 5 401 956
- US-A- 5 798 834

## Description

### TECHNICAL FIELD

The present invention relates generally to fiber optic sensors and, in an embodiment described herein, more particularly provides a method of sensing multiple parameters in a well using a single sensor.

### BACKGROUND

Pressure signals have been measured in subterranean wells for many years. These pressure signals may be relatively low frequency, such as pressures monitored during production logging, drill stem testing, well monitoring, etc. These pressures change relatively slowly. Other pressure signals are relatively high frequency, such as pressure signals used in acoustic telemetry, etc., which may have frequencies from many hertz to many kilohertz.

Present sensors used for measuring these pressure signals are typically designed for measuring only low frequency signals or only high frequency signals. If it is desired to measure both low frequency and high frequency signals, then at least two sensors must be used. This circumstance occurs, for example, in operations where acoustic telemetry is used for communication and pressure transducers are used for monitoring well pressure in the same operation.

It would, therefore, be advantageous to be able to use a single sensor to measure multiple parameters, such as low and high frequency pressure signals.

US 5401956 discloses an optical sensor diagnostic system which includes a tunable narrow wavelength-band source which provides a variable wavelength light into an optical fibre.

### SUMMARY

In a first aspect the invention provides a system defined by claim 1. In a second aspect the invention provides a use defined by claim 9. Further features are defined in the dependent claims.

In carrying out the principles of the present invention, in accordance with an embodiment thereof, a method of sensing multiple parameters is provided which solves the above problem in the art. A fiber optic sensor system is also provided for use in the method.

In one aspect of the invention, a relatively low frequency signal is measured by transmitting light from a light source through a fiber optic sensor. The light is swept over a range of wavelengths. A relatively high frequency signal is also measured by transmitting light from the light source through the sensor at a constant wavelength.

In another aspect of the invention, the light source is a tunable laser and the fiber optic sensor is an interferometric sensor, for example, using a Mach-Zehnder or Michelson interferometer. The sensor has two optical paths. One of the optical paths changes in length in response to a change in a signal, such as pressure, applied to the sensor.

In a further aspect of the invention, an optical output of the sensor is input to a computer via an opto-electric converter. The computer controls the wavelength output of the light source.

In yet another aspect of the invention, multiple sensors may be connected to the light source to measure signals at each of the sensors.

These and other features, advantages, benefits and objects of the present invention will become apparent to one of ordinary skill in the art upon careful consideration of the detailed description of a representative embodiment of the invention hereinbelow and the accompanying drawings.

### BRIEF DESCRIPTION OF THE DRAWINGS

FIG. 1 is a schematic view of a method embodying principles of the present invention;
FIG. 2 is a schematic block diagram of a fiber optic sensor system embodying principles of the present invention, and which may be used in the method of FIG. 1; and
FIG. 3 is a schematic block diagram of another fiber optic sensor system embodying principles of the present invention, and which may be used in the method of FIG. 1.

### DETAILED DESCRIPTION

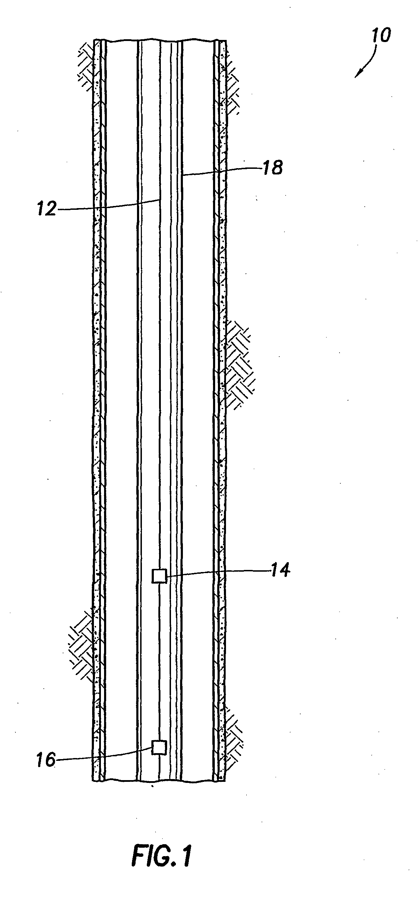

Representatively illustrated in FIG. 1 is a method 10 which embodies principles of the present invention. In the following description of the method 10 and other apparatus and methods described herein, directional terms, such as "above", "below", "upper", "lower", etc., are used only for convenience in referring to the accompanying drawings. Additionally, it is to be understood that the various embodiments of the present invention described herein may be utilized in various orientations, such as inclined, inverted, horizontal, vertical, etc., and in various configurations, without departing from the principles of the present invention.

In the method 10, fiber optic lines 12 are connected to interferometric sensors 14, 16 positioned in a subterranean well. Only two of the sensors 14, 16 are depicted in FIG. 1 as being conveyed into the well as part of a tubing string 18, but it is to be clearly understood that the sensors could be otherwise conveyed and positioned in the well, and any number of sensors could be used, without departing from the principles of the present invention.

The sensors 14, 16 are used in the method 10 to sense multiple parameters, such as both relatively low frequency and relatively high frequency pressure signals at each sensor. The sensors 14, 16 may be distributed within the well at any locations where it is desired to measure these parameters. It is to be clearly understood, however, that the principles of the invention are not limited to measuring pressure signals. Other types of signals may be measured using interferometric sensors. As used herein, the term "signal" encompasses any variable parameter which may be measured. For example, changes in temperature may be measured using interferometric sensors, in keeping with the principles of the present invention.

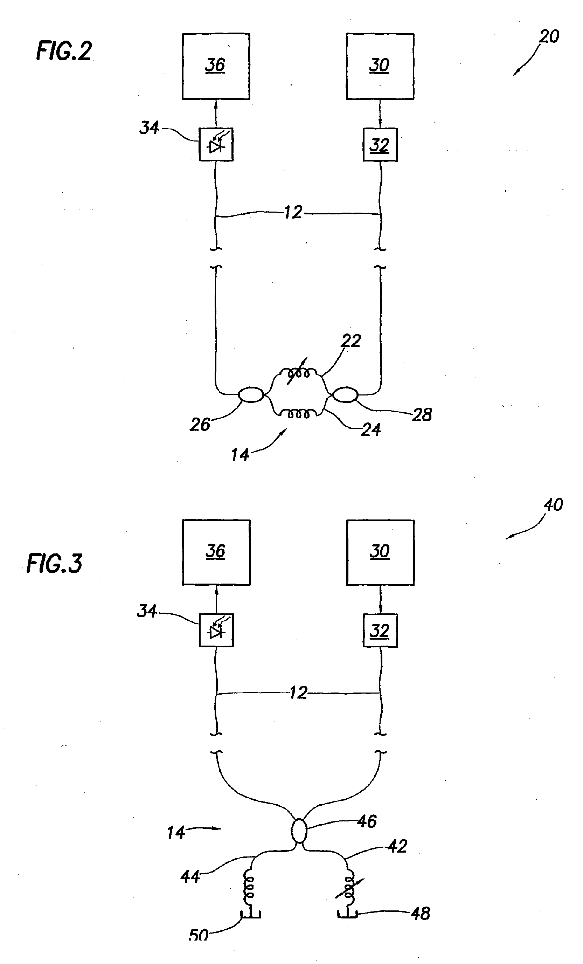

Referring additionally now to FIG. 2, a fiber optic sensor system 20 embodying principles of the present invention is schematically and representatively illustrated. The sensor system 20 may be used in the method 10 of FIG. 1. Thus, elements of the sensor system 20 which are similar to those previously described are indicated in FIG. 2 using the same reference numbers.

Only one sensor 14 is depicted in FIG. 2 for illustrative clarity, However, it is to be understood that any number of sensors may be used in the sensor system 20, for measuring relatively low and relatively high pressure signals at each sensor.

The sensor 14 in the sensor system 20 is depicted in FIG. 2 as including a Mach-Zehnder interferometer, well known to those skilled in the art. The sensor 14 has two optical paths 22, 24 extending between two optical couplers 26, 28. An optical path length of the path 22 changes in response to a change in pressure applied to the sensor 14. For example, the path 22 may be attached to a structure, such as a cylinder or membrane, etc., which experiences a strain when pressure is applied thereto. A change of strain in the structure produces an associated change of optical path length for the path 22.

Light is transmitted through the sensor 14 by means of a light source, such as a tunable laser 30, which may have an isolator 32 associated therewith. Light from the laser 30 is transmitted through one of the fiber optic lines 12 to the coupler 28, where it is split between the two paths 22, 24. After traversing the paths 22, 24, the light is recombined in the coupler 26.

The amplitude of the light output from the coupler 26 depends upon the relationship between the phases of the light received from the paths 22, 24 at the coupler 26. The relative phases of the light received from the paths 22, 24 depends upon the difference in optical path lengths. Therefore, the amplitude of the light output from the coupler 26 may be related to the pressure applied to the sensor 14.

Note that the above description of the sensor 14 is based on the sensor being provided as a Mach-Zehnder sensor. It is, however, to be clearly understood that other types of sensors may be utilized. For example, the sensor 14 may be a Michelson, Fabry-Perot, or other type of sensor.

The light output from the coupler 26 is transmitted via another of the fiber optic lines 12 to an opto-electric converter 34, such as a photodiode or photo voltaic device, etc. The converter 34 converts the optical signal output from the sensor 14 to an electrical signal for input to a computer 36. The computer 36 may be used to analyze the sensor 14 output and to control the laser 30.

When it is desired to measure a relatively low frequency pressure signal with the sensor 14, the computer 36 directs the laser 30 to transmit light having a sweep of wavelengths through the sensor. The amplitude of the optical output of the sensor 14 is dependent upon the wavelength of the light transmitted through the sensor and the pressure applied to the sensor. The computer 36 determines the relationship between the sensor 14 optical output and the swept range of wavelengths, that is, the optical output amplitude as a function of wavelength, thereby enabling a calculation of the pressure applied to the sensor.

When it is desired to measure a relatively high frequency pressure signal with the sensor 14, the computer directs the laser 30 to transmit light having a constant wavelength through the sensor. The optical output of the sensor 14 varies in frequency and amplitude in response to the varied frequency and amplitude of the pressure signal applied to the sensor. The computer 36 may be used to interpret and/or store the sensor output.

Note that the computer 36 may be used to direct the laser 30 to alternately transmit wavelength sweeps and a constant wavelength through the sensor 14, in order to alternately sense low frequency and high frequency pressure signals. However, it is to be clearly understood that it is not necessary for a wavelength sweep transmission to be followed by a constant wavelength transmission, or vice versa, since a wavelength sweep transmission may be performed at any time it is desired to measure a low frequency pressure signal and a constant wavelength transmission may be performed at any time it is desired to measure a high frequency pressure signal.

Referring additionally now to FIG. 3, a fiber optic sensor system 40 embodying principles of the present invention is schematically and representatively illustrated. The sensor system 40 may be used in the method 10 of FIG. 1. The sensor system 40 is similar in many respects to the sensor system 20 described above, but differs in at least one respect in that it utilizes a Michelson interferometer in a sensor to measure multiple parameters. Elements of the sensor system 40 which are similar to those previously described are indicated in FIG. 3 using the same reference numbers.

Only one sensor 14 is depicted in FIG. 3 for illustrative clarity, However, it is to be understood that any number of sensors may be used in the sensor system 40, for measuring relatively low and relatively high pressure signals at each sensor.

The sensor 14 in the sensor system 40 is depicted in FIG. 3 as including a Michelson interferometer, well known to those skilled in the art. The sensor 14 has two optical paths 42, 44 extending between an optical coupler 46 and mirrors 48, 50 at ends of the respective paths. An optical path length of the path 42 changes in response to a change in pressure applied to the sensor 14. For example, the path 42 may be attached to a structure, such as a cylinder or membrane, etc., which experiences a strain when pressure is applied thereto. A change of strain in the structure produces an associated change of optical path length for the path 42.

Light is transmitted through the sensor 14 by means of a light source, such as the tunable laser 30, which may have the isolator 32 associated therewith. Light from the laser 30 is transmitted through one of the fiber optic lines 12 to the coupler 46, where it is split between the two paths 42, 44. After traversing the paths 42, 44, being reflected by the mirrors 48, 50, and again traversing the paths in an opposite direction, the light is recombined in the coupler 46.

The amplitude of the light output from the coupler 46 depends upon the relationship between the phases of the light received from the paths 42, 44 at the coupler 46. The relative phases of the light received from the paths 42, 44 depends upon the difference in optical path lengths. Therefore, the amplitude of the light output from the coupler 46 may be related to the pressure applied to the sensor 14.

The light output from the coupler 46 is transmitted via another of the fiber optic lines 12 to the opto-electric converter 34, which converts the optical signal output from the sensor 14 to an electrical signal for input to a computer 36. The computer 36 may be used to analyze the sensor 14 output and to control the laser 30, as described above, for measuring relatively low frequency and relatively high frequency pressure signals.

Of course, a person skilled in the art would, upon a careful consideration of the above description of representative embodiments of the invention, readily appreciate that many modifications, additions, substitutions, deletions, and other changes may be made to the specific embodiments, and such changes are contemplated by the principles of the present invention. Accordingly, the foregoing detailed description is to be clearly understood as being given by way of illustration and example only, the scope of the present invention being limited solely by the appended claims.

## Claims

1. A fiber optic sensor system (20) for use in sensing relatively low frequency and relatively high frequency pressure signals applied to a sensor in a subterranean well, the system comprising:
at least one interferometric fiber optic sensor (14) exposed in use to both of the relatively low and high frequency signals; and
a variable wavelength light source (30) connected to the sensor (14), the light source (30) being capable of transmitting a sweep of light wavelengths through the sensor (14) and being capable of transmitting a relatively constant wavelength through the sensor (14), the system being adapted to sense the relatively low frequency signal applied to the sensor during the transmission of the sweep of light wavelengths, and to sense the relatively high frequency signal applied to the sensor during the transmission of the relatively constant wavelength.

2. A system according to Claim 1, wherein the light source (30) is adapted to alternately transmit the sweep of wavelengths and the relatively constant wavelength through the sensor (14).

3. A system according to Claim 1, further comprising an opto-electric converter (34) connected to an optical output of the sensor (14).

4. A system according to Claim3, wherein an electrical output of the converter (34) is input to a computer (36) which is connected to the light source (30), the computer (36) controlling the wavelength of the light output by the light source (30).

5. A system according to Claim 1, wherein the sensor (14) includes an interferometer having two optical paths (22, 24), one of the optical paths (22, 24) changing in length in response to a change in a parameter sensed by the sensor (14).

6. A system according to Claim 5, wherein the interferometer is a selected one of a Mach-Zehnder and a Michelson interferometer.

7. A system according to Claim 1, wherein the light source (30) is a tunable laser.

8. A system according to Claim 1, further comprising multiple ones of the sensor (14), and wherein the light source (30) is adapted to transmit the sweep of light wavelengths through each of the sensors (14) and transmit the relatively constant wavelength through each of the sensors (14).

9. The use of a system according to any one of the preceding claims to sense a relatively low frequency signal and to sense a relatively high frequency signal.

10. The use according to Claim 9, wherein sensing the relatively low frequency signal further comprises determining a relationship between an optical output of the sensor (14) and the swept range of wavelengths.

11. The use according to Claim 10, wherein the determining step further comprises determining an amplitude of the optical output as a function of wavelength.

12. The use according to Claim 9, wherein sensing the relatively high frequency signal further comprises measuring a frequency of an optical output of the sensor (14) over time.

13. The use according to Claim 9, wherein the signal is a pressure signal.

14. The use according to claim 9 of a system according to claim 8, wherein:
the light source (30) is connected to the multiple ones of the sensors (14);
and wherein sensing the relatively low frequency signal further comprises sensing relatively low frequency signals at each of the sensors (14) by transmitting light from the light source (30) through each of the sensors (14), the light output from the light source (30) being swept over the range of wavelengths;
and wherein sensing the relatively high frequency signal further comprises sensing relatively high frequency signals at each of the sensors (14) by the light source (30) transmitting the sweep of light wavelengths through each of the sensors (14) and transmitting the relatively constant wavelength through each of the sensors (14).

## Patentansprüche

1. Faseroptisches Sensorsystem (20) zur Verwendung bei der Erfassung von Drucksignalen relativ niedriger Frequenz und relativ hoher Frequenz, die an einen Sensor in einem unterirdischen Bohrloch angelegt werden, wobei das System Folgendes aufweist:
wenigstens einen interferometrischen faseroptischen Sensor (14), der im Gebrauch sowohl den Signalen relativ niedriger als auch den Signalen relativ hoher Frequenz ausgesetzt ist, und
eine Lichtquelle variabler Wellenlänge (30), die mit dem Sensor (14) verbunden ist, wobei die Lichtquelle (30) einen abgetasteten Bereich von Lichtwellenlängen durch den Sensor (14) durchlassen kann und eine relativ konstante Wellenlänge durch den Sensor (14) durchlassen kann, wobei das System zum Erfassen des Signals relativ niedriger Frequenz, das während des Durchlassens des abgetasteten Bereichs von Lichtwellenlängen an den Sensor angelegt wird, und zum Erfassen des Signals relativ hoher Frequenz, das während des Durchlassens der relativ konstanten Wellenlänge an den Sensor angelegt wird, ausgeführt ist.

2. System nach Anspruch 1, wobei die Lichtquelle (30) zum abwechselnden Durchlassen des abgetasteten Bereichs von Wellenlängen und der relativ konstanten Wellenlänge durch den Sensor (14) ausgeführt ist.

3. System nach Anspruch 1, das ferner einen optoelektrischen Wandler (34) aufweist, der mit einem optischen Ausgang des Sensors (14) verbunden ist.

4. System nach Anspruch 3, wobei ein elektrischer Ausgang des Wandlers (34) in einen Computer (36) eingegeben wird, der mit der Lichtquelle (30) verbunden ist, wobei der Computer (36) die Wellenlänge des von der Lichtquelle (30) ausgegebenen Lichts regelt.

5. System nach Anspruch 1, wobei der Sensor (14) ein Interferometer mit zwei optischen Wegen (22, 24) beinhaltet, wobei sich die Länge von einem der optischen Wege (22, 24) als Reaktion auf eine Änderung eines von dem Sensor (14) erfassten Parameters verändert.

6. System nach Anspruch 5, wobei das Interferometer ein aus einem Mach-Zehnder- und einem Michelson-Interferometer ausgewähltes ist.

7. System nach Anspruch 1, wobei die Lichtquelle (30) ein durchstimmbarer Laser ist.

8. System nach Anspruch 1, das ferner mehrere des Sensors (14) aufweist und wobei die Lichtquelle (30) zum Durchlassen des abgetasteten Bereichs von Lichtwellenlängen durch jeden der Sensoren (14) und zum Durchlassen der relativ konstanten Wellenlänge durch jeden der Sensoren (14) ausgeführt ist.

9. Verwendung eines Systems nach einem der vorhergehenden Ansprüche zum Erfassen eines Signals relativ niedriger Frequenz und zum Erfassen eines Signals relativ hoher Frequenz.

10. Verwendung nach Anspruch 9, wobei das Erfassen des Signals relativ niedriger Frequenz ferner das Ermitteln einer Beziehung zwischen einem optischen Ausgang des Sensors (14) und dem abgetasteten Wellenlängenbereich aufweist.

11. Verwendung nach Anspruch 10, wobei der Ermittlungsschritt ferner das Ermitteln einer Amplitude des optischen Ausgangs als eine Funktion der Wellenlänge aufweist.

12. Verwendung nach Anspruch 9, wobei das Erfassen des Signals relativ hoher Frequenz ferner das Messen einer Frequenz eines optischen Ausgangs des Sensors (14) mit der Zeit aufweist.

13. Verwendung nach Anspruch 9, wobei das Signal ein Drucksignal ist.

14. Verwendung nach Anspruch 9 eines Systems nach Anspruch 8, wobei:
die Lichtquelle (30) mit den mehreren der Sensoren (14) verbunden ist,
und wobei das Erfassen des Signals relativ niedriger Frequenz ferner das Erfassen von Signalen relativ niedriger Frequenz an jedem der Sensoren (14) durch Durchlassen von Licht von der Lichtquelle (30) durch jeden der Sensoren (14) aufweist, wobei die Lichtausgabe von der Lichtquelle (30) über den Wellenlängenbereich gestrichen wird,
und wobei das Erfassen des Signals relativ hoher Frequenz das Erfassen von Signalen relativ hoher Frequenz an jedem der Sensoren (14), indem die Lichtquelle (30) den abgetasteten Bereich von Lichtwellenlängen durch jeden der Sensoren (14) durchlässt und die relativ konstante Wellenlänge durch jeden der Sensoren (14) durchlässt, aufweist.

## Revendications

1. Système de capteurs à fibres optiques (20) destiné à être utilisé dans la détection de signaux de pression à fréquence relativement basse et à fréquence relativement élevée lesquels sont appliqués à un capteur dans un puits souterrain, le système comprenant :
au moins un capteur interférométrique à fibres optiques (14) lequel est exposé, en utilisation, à la fois aux signaux à fréquence relativement basse et à fréquence relativement élevée ; et
une source de lumière à longueur d'onde variable (30) connectée au capteur (14), la source de lumière (30) étant apte à transmettre un champ de longueurs d'ondes de lumière à travers le capteur (14), et étant apte à transmettre une longueur d'onde relativement constante à travers le capteur (14), le système étant conçu pour détecter le signal à fréquence relativement basse appliqué au détecteur pendant la transmission du champ de longueurs d'ondes de lumière, et pour détecter le signal à fréquence relativement élevée appliqué au détecteur pendant la transmission de la longueur d'onde relativement constante.

2. Système selon la revendication 1, la source de lumière (30) étant conçue pour transmettre en alternance le champ de longueurs d'ondes et la longueur d'onde relativement constante à travers le capteur (14).

3. Système selon la revendication 1, comprenant en outre un convertisseur opto-électrique (34) lequel est connecté à une sortie optique du capteur (14).

4. Système selon la revendication 3, une sortie électrique du convertisseur (34) étant injectée à un ordinateur (36) lequel est connecté à la source de lumière (30), l'ordinateur (36) pilotant la longueur d'onde de la lumière produite par la source de lumière (30).

5. Système selon la revendication 1, le capteur (14) incluant un interféromètre avec deux chemins optiques (22, 24), l'un des chemins optiques (22, 24) changeant en longueur en réaction à un changement dans un paramètre détecté par le capteur (14).

6. Système selon la revendication 5, l'interféromètre étant un poste sélectionné parmi un interféromètre Mach-Zehnder et un interféromètre Michelson.

7. Système selon la revendication 1, la source de lumière (30) étant un laser accordable.

8. Système selon la revendication 1, comprenant en outre des postes multiples du capteur (14), et cas dans lequel la source de lumière (30) est conçue de façon à transmettre le champ de longueurs d'ondes de lumière à travers chacun des capteurs (14) et à transmettre la longueur d'onde relativement constante à travers chacun des capteurs (14).

9. Utilisation d'un système, selon l'une quelconque des revendications précédentes, pour détecter un signal à fréquence relativement basse et pour détecter un signal à fréquence relativement élevée.

10. Utilisation selon la revendication 9, la détection du signal à fréquence relativement basse comprenant en outre l'opération consistant à déterminer une corrélation entre une sortie optique du capteur (14) et la gamme balayée de longueurs d'ondes.

11. Utilisation selon la revendication 10, l'étape de détermination comprenant en outre la détermination d'une amplitude de la sortie optique en tant que fonction d'une longueur d'onde.

12. Utilisation selon la revendication 9, la détection du signal à fréquence relativement élevée comprenant en outre l'opération consistant à mesurer une fréquence d'une sortie optique du capteur (14) dans le temps.

13. Utilisation selon la revendication 9, le signal étant un signal de pression.

14. Utilisation selon la revendication 9 d'un système selon la revendication 8 :
la source de lumière (30) étant connectée aux postes multiples de capteurs (14) ;
et cas dans lequel la détection du signal à fréquence relativement basse comprend en outre la détection de signaux à fréquence relativement basse au niveau de chacun des capteurs (14) grâce à la transmission de lumière provenant de la source de lumière (30) à travers chacun des capteurs (14), la sortie lumineuse émanant de la source de lumière (30) étant balayée sur la gamme des longueurs d'ondes ;
et cas dans lequel la détection du signal à fréquence relativement élevée comprend en outre la détection de signaux à fréquence relativement élevée au niveau de chacun des capteurs (14) grâce au fait que la source de lumière (30) transmet le champ de longueurs d'ondes de lumière à travers chacun des capteurs (14) et transmet la longueur d'onde relativement constante à travers chacun des capteurs (14).
